# EUROPEAN PATENT APPLICATION

(11) **EP 1 988 618 A2**
(43) Date of publication of application: **05.11.2008**
(21) Application number: 08000210.8
(22) Date of filing: 08.01.2008
(51) Int. Cl.: H02K 1/18, H02K 17/16, H02K 53/00

(54) **Compact electrical motor**

(30) Priority: 04.05.2007 IT MI20070165
(71) Applicant: Elio Cavagna S.r.l., 26832 Galgagnano (LO) (IT); G. Torti di G. Torti & C. S.n.c., 20156 Milano (IT)
(72) Inventor: Cavagna, Elio, 20077 Melegnano (Milano) (IT); Torti, Giovanni, 20154 Milano (IT)
(74) Representative: Lecce, Giovanni

(57) **Abstract**

A compact electrical motor (10) especially suitable for being used for applications that do not require a constant revolution speed and a precise position control comprising a rotor (24), an active portion (26), at least one statoric electrical winding (28) and at least a second statoric electrical winding (30) arranged coaxially to said active portion (26), a shaft (18) whereto the rotor (24) is fixed, with said motor powered in alternating current, with constant number of revolutions and frequency synchronised.

## Description

This invention relates to a compact electrical motor.

More in particular, this invention relates to a compact electrical motor especially suitable for being used for those applications that do not require a constant revolution speed and a precise position control such as, for example, machines that carry out operations of longitudinal cutting of flexible materials such as cardboard, cloth and the like.

This invention, moreover, finds application in the motor driving of small sized display structures, such as showcases or the like.

As known, compact electrical motors, also called "pancake" motors or "disk" motors, are a type of motors characterised in that they have a diameter basically greater than the thickness of the motor itself.

Such motors, which typically are of the "torque", multipolar, direct current type, allow direct transmission of the motion without the use of intermediate components such as reduction gears or the like.

This type of compact motors is generally used on robots, transfer machines and other devices that require high torque values and moderate speeds together with a precise position control.

However, these types of electrical motors show considerable drawbacks.

The compact motors mentioned above typically are direct current motors of the brush type and as such, they entail drawbacks related to the fact that said brushes get easily worn and this involves periodical maintenance operations.

Moreover, the use of brushes entails the onset of sparks, caused by the transients for opening the inductive windings during the switching, which cause electrical transients unacceptable in some application fields since they can cause electromagnetic compatibility problems.

A further drawback of this type of motors is represented by the fact that if brushless motors are used, which ensure high efficiency and torques, a feedback control of position and/or speed is required; this entails the need of using an inverter for every single motor, with consequent increase of costs and of the complexity of the electronic control.

The object of this invention is to obviate the disadvantages mentioned hereinabove.

More in particular, the object of this invention is to provide a compact electrical motor to be used in applications for which a precise position control and/or a constant revolution speed are not required.

A further object of this invention is to provide a compact electrical motor for which a feedback control is not required.

A further object of this finding is to provide the users with a compact electrical motor suitable for ensuring high level of resistance and reliability over time, also such as to be easily and inexpensively constructed.

These and other objects are achieved by the compact electrical motor of this invention which comprises a rotor, a stator, at least one electrical winding and at least a further electrical winding arranged coaxially to said stator, a shaft whereto the rotor is fixed, with said motor powered in alternating current, with constant number of revolutions and frequency synchronised.

The construction and functional features of the compact electrical motor of the invention shall be better understood from the following detailed description, wherein reference is made to the enclosed drawing showing a preferred and non-limiting embodiment thereof, and wherein:

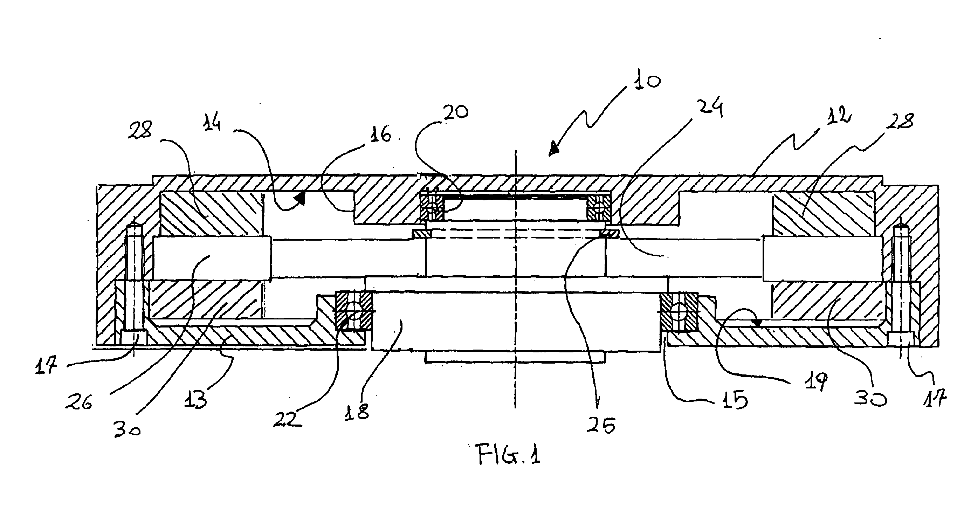

figure 1 shows a schematic cross section view of the compact electrical motor of this invention.

With reference to the above figure, the compact electrical motor of this invention globally indicated with 10, preferably is a three-phase asynchronous motor and comprises a container body 12, shaped as a "glass", with quadrangular or basically circular section and made of metal or otherwise suitable material.

The inner surface of the container body 12 defines a shaped slot 14 with substantially circular profile, suitable for receiving the fixed and mobile elements of the electrical motor.

The container body 12 is closed, at the open end or front thereof, by a flange 13 of basically circular shape. The same flange is centrally provided with a through opening 15.

The flange 13 is steadily constrained to the container body 12, for example by screws 17 or other equivalent retaining means, so as to allow the removal of the flange itself for operations of maintenance and/or check of the components inside the container body 12; the same flange, moreover, protects the components inside the container body 12 from dust infiltrations or the like and can be provided with special seals suitable for ensuring the fluid seal.

An annular appendix 16 develops by a limited portion at the central portion of the inner base or front of the container body 12, vertically and in the direction of the open end of the container body itself. Said annular appendix 16 defines a seat for receiving means suitable for supporting the rotation of a shaft 18 with differentiated diameters.

The shaft 18 in case can be hollow, so as to allow the passage of electrical cables for supplying, for example, devices for lighting showcases placed in rotation by means of the motor object of this invention.

The shaft 18 is provided with a seat for a key suitable for fixing the elements connected to the load to place in rotation.

In alternative embodiments, at the free ends thereof such shaft 18 can show an outer and/or inner taper or have a male or female type profile, in case grooved, so as to allow connecting two or more compact motors of this invention to one another; to this end, the container body 12 shows a through opening of preferably circular shape coaxially to shaft 18.

At the through opening 15 and in the direction of the annular appendix 16 of the container body 12, the flange 13 defines a further seat for receiving further means suitable for supporting the rotation of the shaft 18.

At the inner front facing the shaped slot 14 of the container body 12 and coaxially to the through opening 15, moreover, the same flange 13 defines a groove 19 with substantially circular profile and suitable for receiving the components described in detail hereinafter.

The means and the further means suitable for supporting the rotation of the shaft 18 are preferably and respectively defined by at least one bearing 20 and 22.

On the shaft 18 there is keyed a rotor 24, preferably of the squirrel-cage type, which is stabilised relative to the shaft 18 itself by interference or by means of a ring 25, for example of the Seeger type, which prevents a relative movement in axial direction of said rotor 24 relative to the shaft 18.

In alternative embodiments, the squirrel-cage rotor can have a plurality of permanent magnets, stabilised to the cage itself, suitable for synchronising the rotor relative to the revolving magnetic field of the stator; in this configuration, the motor becomes of the hybrid asynchronous type.

An elastic element (not shown in the figure), for example defined by a spring, is positioned between the bottom of the annular appendix 16 and the bearing 20; such spring has the advantageous function of compensating any axial movements of the shaft 18 during the motor revolution and caused by the expansion or by loads on the shaft 18 itself.

A stator 26 is arranged concentrically and externally to the rotor 24, which is constrained with the side surface thereof to the side surface of the shaped slot 14 of the container body 12.

At least one electrical winding 28 coaxial to the rotor 24 and to the rotor 26 is arranged inside the shaped slot 14 of the container body 12 and at the bottom thereof.

At least a further electrical winding 30 is arranged on the bottom of the groove 19 of the flange 13.

The stator 26 is arranged in intermediate position relative to the electrical winding 28 and to the further electrical winding 30.

As said above and with special reference to the alternative embodiment at figure 1, the compact electrical motor of this invention is closed by the flange 13 and therefore totally protected from dust infiltrations or the like.

Moreover, in alternative embodiments, said compact electrical motor can be protected against possible water infiltrations by means of seals.

The compact electrical motor of this invention is powered in alternating current and preferably cooled by convection; however, in an alternative embodiment, the same motor is cooled by a forced recirculation of air or water in a circular chamber obtained concentrically and externally to the stator.

As it can be noticed from the above, the advantages achieved by the invention are clear.

Since the compact electrical motor of this invention is powered in alternating current and is used in applications that do not require a position and/or speed control, it does not require a feedback control.

Moreover, in the case of use of multiple motors, the application of an inverter for every single motor is not required, but a single inverter allows piloting multiple motors; as a consequence this leads to an advantageous reduction of costs.

A further advantage of the compact motor of this invention is represented by the fact that it is of the modular type, that is, it allows coupling two or more than two motors of the same type so as to add the transmissible torque or connecting the same to each other by means, for example, of gears, so as to split the total load to be moved (that is, the overall torque) among multiple small sized motors; this allows limiting the overall dimensions and the weights, since larger sized motors also entail higher weights, overall dimensions in addition to costs.

Even if the invention has been described with particular reference to an embodiment thereof, only made by way of a non-limiting example, several changes and variations will appear clearly to a man skilled in the art in the light of the above description. Therefore this invention is intended to include any changes and variations thereof falling within the spirit and the scope of the following claims.

## Claims

1. A compact electrical motor (10) especially suitable for being used for applications that do not require a constant revolution speed and a precise position control comprising a rotor (24), a stator (26), at least one electrical winding (28) and at least one further electrical winding (30) arranged coaxially to said stator (26), a shaft (18) whereto the rotor (24) is fixed, with said motor being **characterised in that** it is powered in alternating current, with constant number of revolutions and frequency synchronised.

2. The compact electrical motor according to claim 1, **characterised in that** it is a three-phase asynchronous or hybrid motor.

3. The compact electrical motor according to the previous claims, **characterised in that** the container body (12) is closed by means of a flange (13).

4. The electrical motor according to any one of the previous claims, **characterised in that** the container body (12) is shaped as a "glass" with the inner surface that defines a shaped slot (14) with substantially circular profile suitable for receiving the at least one electrical winding (28).

5. The electrical motor according to any one of the previous claims, **characterised in that** at the inner front facing the shaped slot (14) of the container body (12), the flange (13) defines a groove (19) with substantially circular profile and suitable for receiving the at least one further electrical winding (30).

6. The electrical motor according to any of the previous claims, **characterised in that** it comprises means suitable for supporting the shaft rotation (18).

7. The electrical motor according to any one of the previous claims, **characterised in that** the means suitable for supporting the shaft rotation (18) are defined by at least one bearing (20) and by at least a further bearing (22) arranged on the shaft itself.

8. The electrical motor according to any one of the previous claims, **characterised in that** the shaft (18) is hollow.

9. The electrical motor according to any one of the previous claims, **characterised in that** the shaft (18) defines an outer and/or inner taper at the free ends thereof.

10. The electrical motor according to any one of the previous claims, **characterised in that** the shaft (18) has a male and/or female grooved type profile at the free ends thereof.

11. The electrical motor according to any one of the previous claims, **characterised in that** it comprises an elastic element positioned between the bottom of an annular appendix (16), obtained at the central portion of the front or inner base of the container body (12), and the bearing (20).
